Europäisches Patentamt

European Patent Office

Office européen des brevets

(19)

(11) Publication number: **0 166 614**
A2

## (12) EUROPEAN PATENT APPLICATION

(21) Application number: 85304571.4

(22) Date of filing: 26.06.85

(51) Int. Cl.⁴: **G 11 B 7/24**

(30) Priority: 29.06.84 US 626249

(71) Applicant: **MINNESOTA MINING AND MANUFACTURING COMPANY, 3M Center, P.O. Box 33427, St. Paul, MN 55133 (US)**

(43) Date of publication of application: 02.01.86 Bulletin 86/1

(72) Inventor: **Aruga, Akira Sumitomo 3M Limited, Central P.O. Box 490 33-1 Tamagawadai 2-chome, Setagaya-ku Tokyo 158 (JP)**

(84) Designated Contracting States: **DE FR GB IT NL**

(74) Representative: **Baillie, Iain Cameron et al, c/o Ladas & Parry Isartorplatz 5, D-8000 München 2 (DE)**

(54) Encoated optical recording medium.

(57) An optically tracked recording article is described which can be encoded with machine readable information. The article comprises a substrate, a radiation sensitive encodable layer and a layer bearing a machine readable tracking pattern. Information may be recorded on the radiation sensitive layer with excellent alignement or registry with the tracking pattern.

EP 0 166 614 A2

0166614

ENCOATED OPTICAL RECORDING MEDIUM

## BACKGROUND OF THE INVENTION

### 1. Field of the Invention

The present invention relates to optical recording media and systems designed for the storage and retrieval of information thereon. Particularly described are disk systems with an optical tracking capability and a radiation sensitive encodable layer contiguous to a layer bearing a tracking pattern.

### 2. Prior Art

Various types of optical disk systems have been described for the storage and retrieval of information. Two common problems which have been evident in the development of such media relate to protecting the radiation sensitive surface from physical damage and further providing tracking means on the optical storage medium. Tracking means or patterns position reading heads and provide means for the rapid location of and access to specific areas of information recorded on said medium.

It is necessary to protect the radiation sensitive surface of record blanks or recorded media from a variety of sources of potential damaging effect. The record blank is subject to damage or degradation, prior to being recorded upon, from mechanical scratches, aerial oxidation, and chemical attack, for example. Additionally, the recorded medium is subject to similar types of damage, with the additional complication of accumulated dust or other particulate matter resulting in errors when reading information stored on the medium.

A variety of materials, configurations and methods have been disclosed for the construction and protection of optical recording media. U.S. Patent No. 4,037,251 discloses a protective coating for a pre-recorded optical disk where information is optically read out via radiation transmission. The protective coating is immediately adjacent the recorded surface and the material of said layer is a residue left by a liquid composition following evaporation of a solvent, e.g., cellulose nitrate.

U.S. Patent No. 4,308,545, describes a protected optical disk of the DRAW media type wherein the recording layers are present on a transparent substrate and a protective opaque metal cover is affixed to a central aperture and the edges of the disk. A closed space is maintained between these two contacts, i.e., an air gap is maintained between the recording layers and said metal cover. Recording and readout of information is accomplished through the transparent substrate on which the recording layer is present. Such a construction cannot be utilized with an optical disk which has radiation sensitive layers on both major surfaces of a substrate and which is also intended to be used for storage and retrieval of information from both surfaces.

U.S. Patent No. 4,331,966 discloses an information storage medium of the optical disk type which overcomes thermal and structural problems of previous protective systems. The materials of choice are glass plates which are adhesively bonded to encapsulate the optical recording medium. The substrate upon which the radiation sensitive layers are deposited is recessed to provide an air gap between these layers and the glass cover plate. While such a configuration provides for an improved protected disk, the substrate described requires precise machining and the incorporated glass member is subject to shock induced breakage.

U.S. Patent No. 4,074,282 describes a protective configuration for an optical recording medium wherein a disk shaped member, bearing a radiation sensitive surface, is maintained in spaced relationship to a second transparent disk shaped member by a pair of coaxial sealing rings of differing diameters. A potential disadvantage of such a configuration is its semi-rigid character and the liklihood of transmission of vibrations or oscillations to the sensitive recording layer.

U.S. Patent No. 4,038,524 discloses a means whereby an optical recording medium carrying information in the form of a relief impression and read by transmission, has a transparent protective layer. The transparent protective layer discloses smooth faces and is intended to adhere to the peaks of the relief impression without filling the troughs of said relief impression. The protective means described is only suitable for pre-recorded media and in particular a stamped replica generated from a master.

Commonly assigned U.S. Patent application S.N. 474,877 filed on March 14, 1983 discloses an improved protective cover assembly for a disk shaped optical recording medium having two substantially identical halves. Each half has an inner surface adapted to provide upon assembly with the medium, an air gap adjacent an optical recordable coating on the medium.

A further need in disk systems discussed earlier relates to tracking of the optical recording medium. The prior art describing methods of protecting such media does not deal with the need to provide tracking means.

During playback of an optical disk, miscentering, bearing looseness, dimensional instability of the substrate, which is manifested as disk distortion, can each contribute to a situation where the recorded information track can move across the read head lens.

One approach to sensing tracking errors uses three spots, two of which straddle the information spot so that an increase in signal returned from either spot indicates movement of the information spot track.

Another method uses a single spot which is "dithered" back and forth across the information track at a speed much higher than any anticipated tracking error. The phase of the resulting amplitude modulation of the detected signal is indicative of the tracking error.  The movements of the information track are then typically followed by servocontrols.

U.S. Patent No. 4,334,007 describes a means for providing continuous recording tracks in the form of grooves on the substrate of an optical recording disk.  The continuous track is optically trackable by optical servocontrol means.  A photochemical technique provides the tracks wherein, in one embodiment, 1) a photoresist is coated over an auxiliary layer, 2) said photoresist is subsequently exposed by a mask, 3) then the photoresist is preferentially removed by chemical etching and 4) said auxiliary layer is further removed by etching, with the residual photoresist being removed via solvent.

Radial and vertical servocontrol means are used to ensure that the reading head spot remains centered on the thus generated track even with variations in eccentricity of the optical disk and imperfections in substrate flatness.

It is often desirable to provide format means for an optical recording medium of the disk configuration. Formatting in a general sense refers to providing information means for identifying program content of an optical disk, sector location, address location to enable location of a specific file, and the like.

It is known to provide such information on the radiation sensitive surface of an optical disk by the same techniques used to record other information. Alternatively the substrate itself may contain such format information in the form of preformed optically detectable features.

U.S. Patent No. 4,329,575 describes a video disk having a label for identifying program material stored on the surface of the disk.  The label is formed in machine readable format comprising grooves in the surface of the record.  In one embodiment whorls of a spiral groove are spaced alternately with ungrooved areas.  This provides a change in specular reflection, corresponding to each area, which can be optically detected.

## SUMMARY OF THE INVENTION

In the present invention a protected optical recording medium is provided with tracking and formating information incorporated as an integral part of a protective cover element for the optical recording medium.

The present invention provides a system wherein an optical recording medium of the write once type, designed to be read by reflection or transmission is provided with a protective cover assembly having tracking and formatting information thereon.  Systems having information on both major surfaces would most likely be readable by relection, unless the information is by design out of register on opposed surfaces so as to be readable by transmission.

The present invention also describes a system wherein an erasable optical recording medium of the magneto-optic type or the like, designed to be read via reflection or transmission, is provided with a protective cover assembly having tracking and formatting information thereon.

The present invention also describes a means for including tracking and formatting information on at least one major surface of a protective cover assembly.

The present invention comprises an optical recording medium having a protective cover assembly wherein formatting and tracking information is provided as an integral part of said cover assembly.  Optical tracking and format means are provided on the inwardly facing major surface of the protective cover assembly enabling the use of an ungrooved substrate for the radiation sensitive layer(s).  The invention has utility with optical recording media designed for either reflective or transmissive readout and further can be used with permanent as well as erasable optical recording media.

## BRIEF DESCRIPTION OF THE DRAWINGS

Figure 1 - A cross sectional representation of an optical recording medium of the prior art having a grooved substrate and a protective covering.

Figure 2 - A cross sectional representation of an optical recording medium of the prior art, of the embossed type, having a protective cover layer.

Figure 3 - A cross sectional representation of an optical recording medium of the present invention having a protective cover layer incorporating tracking information.

Figure 4 - A perspective view of a protective cover element of the present invention adapted for use with an optical recording medium and having tracking and formatting information incorporated thereon.

## DETAILED DESCRIPTION OF THE DRAWINGS

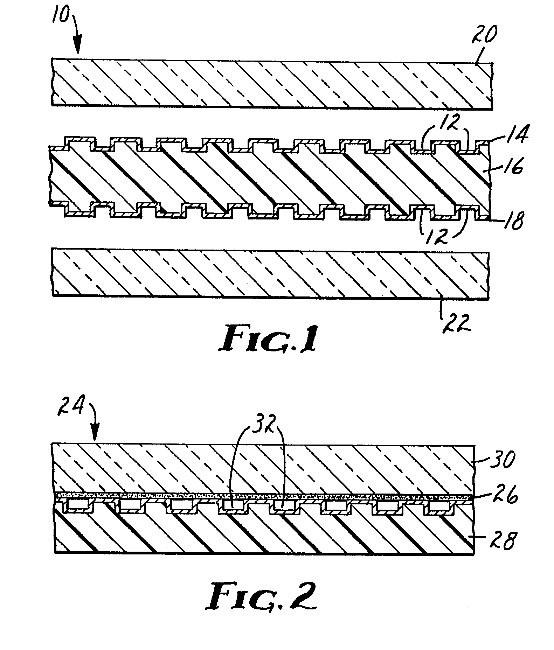

Figure 1 shows an optical DRAW media 10 of the prior art having a central core or substrate 16 having both surfaces embossed for tracking purposes. The grooves 12 are generally in the form of a spiral or concentric track formed by conventional means such as stamping. Radiation sensitive layers 14 and 18 are present over the grooved surfaces. Formatting information may also be generated on the radiation sensitive layers 14 and 18. Protective layers 20 and 22 are secured on the media to protect the radiation sensitive layers 14 and 18.

Figure 2 illustrates another optical disk 24 of the prior art. A sheet like layer 28 generally formed of a rigid or flexible transparent material having tracks 32, usually formed by a master stamping disk, said tracks comprising a succession of diffractive elements formed by peaks and troughs. The disk 24 further incorporates a transparent protective cover 30 of, for example, polyethyleneterephthalate which is secured to the peaks of the diffractive elements by a thin layer of adhesive 26.

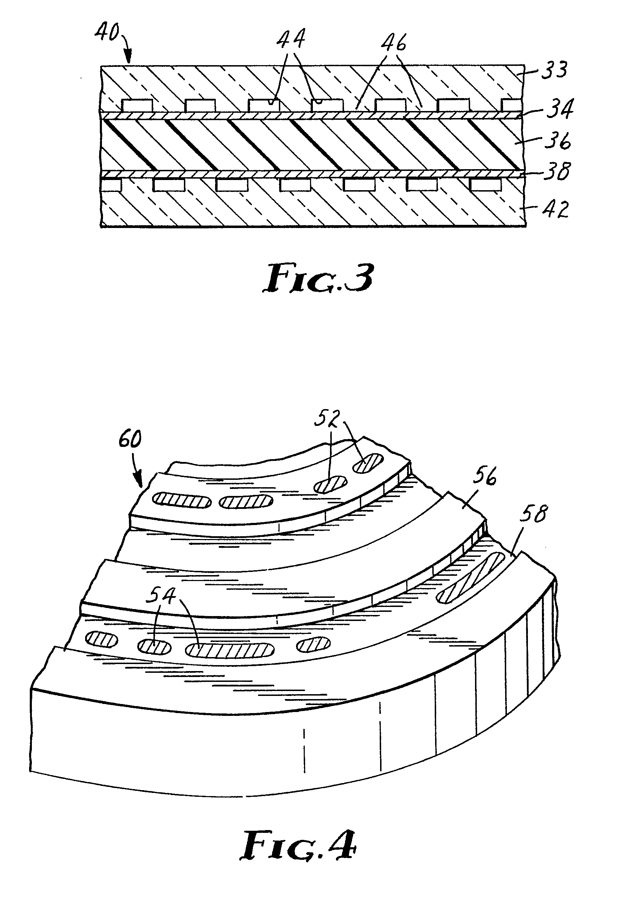

Figure 3 illustrates one embodiment of a protected optical recording medium 40 of the present invention. A substrate 36 comprising a sheet of transparent material carries radiation sensitive layer(s), 34 and 38, one of which is on  at least one major surface thereof. The substrate 36 bearing the radiation sensitive layer(s) 34 and 38 further secured to the protective cover layers 32 and 42, thereby obtaining improved dimensional stability. The metal substrates of the prior art needed for dimensional stability therefore may be replaced with more economical and more easily prepared plastic substrates. Neither the substrate 36 nor the radiation sensitive layer(s) 34 and 38 thereon, as one element of the instant invention, are pre-grooved for tracking, or formated. Rather smooth untreated sheet(s) of transparent polymeric material 32 and 42 are used for the tracking or formatting. The difficulties of providing a pre-grooved substrate, particularly one having grooves on both major surfaces as shown in Figure 1, which is free of defects introduced by known grooving processes are significant. This is important because such defects often become evident only after the deposition of the radiation sensitive layer(s) and subsequent recording and reading of information thereon. The substrate 36 must be transparent onhly if the information is to be imaged through the substrate or if the recording medium 40 is to be read by transmitted radiation.

The radiation sensitive layer(s) 34 and 38 may comprise a variety of materials and, although illustrated as single layers, may comprise a multiplicity of layers.

Figure 4 shows a protective cover element 60 of the present invention with optional format information 52 and 54 molded into said element. Said format information may be represented by a succession of features, molded or otherwise formed into and located along either the grooves 58 or the adjacent raised lands 56, which are optically detectable. If such optically detectable features, intended to provide format information, are molded into the lands 56 a more efficient use is made of the radiation sensitive layer(s) 34 for storage of other desired information. The format information as represented by said features is typically utilized to provide data as to sector location, address location, program content and the like.

Information generated on or in the radiation sensitive layer(s) will be written in those areas of said layers adjacent the grooves 44 and, as it is desirable to maintain high carrier to noise ratios (C/N), the raised lands 46 will preferably be affixed to the radiation sensitive surface of the optical recording element thereby minimizing losses due to defocusing of the incident read and/or write laser beam. Typical means for affixing said cover element to said optical recording element will include application of a thin layer of pressure or heat sensitive adhesive to the surface of the radiation sensitive layer and then bonding said elements to form the protected, tracked and performatted, optical recording medium of the present invention.

## DESCRIPTION OF THE INVENTION

The present invention relates to an encodable, optically trackable article comprising a substrate, a radiation sensitive encodable layer on at least one surface of the substrate and over the encodable layer a protective layer having an optically trackable pattern therein. The optically trackable pattern is preferably on the surface of the protective layer facing the radiation sensitive encodable layer (so that a single beam can

-9-

0166614

be used) but may also be within the protective layer. It is not preferred to have the optically trackable pattern on the outer surface as that would expose it to potentially damaging effects.

A preferred construction according to the present invention comprises a substrate having both surfaces carrying radiation sensitive encodable layers and protective layers over both encodable layers. The protective layers contain optically trackable patterns which are preferably on the surface of the layers facing the radiation sensitive encodable layers.

The substrate may be of substantially any solid material or composition. The substrate may be thin and flexible for web handling or rigid and thick for mechanical strength. Dimensional stability (i.e., inplasticity) is not even essential since tracking information can be on the covering layers or materials. Typical materials would be polymeric layers, ceramics, glass, metal and the like. Polymeric materials are the most preferred materials for the substrate because of their ease of manufacture, low cost, durability, and range of properties. It is preferred that dimensionally stable substrates be selected so that dramatic expansions and contractions of the layer do not occur. Amongst the types of polymers that could be used are vinyl resins (polyvinyl chloride, polyvinyl acetate, polyvinylidene chloride, etc.), vinyl acetates (polyvinyl butyral, polyvinyl formal), polyamides, polyimides, polycarbonates, polyacrylic resins (polymethylmethacrylate, poly-n-butylacrylate, copolymers of acrylate functional materials including methylacrylate, methylmethacrylate, n-butyl acrylate, acrylic anhydride, acrylic acid, methacrylic acid, etc.), polyesters (polyethylene terephthalate, etc.), polyolefins (polyethylene, polypropylene, etc.), polyepoxide polymers, polysiloxanes, polysilanes, etc. The preferred polymers would include polyesters, polycarbonates and polyacrylic resins.

The substrates may be transparent, translucent or opaque depending on the needs of the system. There is no need for the substrate surface to be modified or marked except as might be desirable or necessary for it to be adhered to the radiation sensitive layer or other layers applied or adhered thereto. For example, the substrate may be treated with corona discharge, plasma etching, chemical etching, nucleating layers, and/or primer layers to enhance bonding to the radiation sensitive layer if needed. These surface modifications or treatments preferably will not create topography or markings that would be read or optically tracked by the tracking means used on the patterns in the protective layer. A relatively smooth surface on the substrate is preferred. The substrate is considered smooth if the optical tracking and information retrieving means do not read the surface topography as noise.

The radiation sensitive encodable layers may comprise any composition or material in which information is recordable in the form of discrete features or modifications preferably generated by a focused, modulated laser beam on said layer. These generated features should be either magnetically, capacitatively, or electrically optically readable. The layer should be absorptive of the types of radiation used in laser recording systems, specifically ultraviolet radiation (approximately 200-410 nm), visible radiation (approximately 400-800 nm) and infrared radiation(approximately 780-1300 nm). A wide variety of radiation sensitive layers and constructions are known in the art that could be useful in the practice of the present invention. Generally such systems as ablative or deformable layers (metal, metal compounds such as metal oxide, metal sulfides, metal chalcogenides, metal alloys, metal silicides, etc. or dye ablation, for example), vesicular layers, dye-forming layers, dye-bleach layers, phase transition layers, color shift layers, magneto-optic layers, and other systems which are known to be readable in disk type information systems may be used. Amongst the prefered type radiation sensitive layers would be silver halide layers, vesicular systems (e.g., as described in U.S. Patents 4,211,838 and 4,278,756), dye ablation systems with either monomeric or polymeric dyes (e.g., as described in U.S. Patent 4,364,986), dye-bleach and dye-forming layers (as described in U.S. Patent 3,740,761), metal ablation systems (as described, for example, in U.S. Patent No. 4,216,501) and magnetically active photosensitive layers (as described, for example, in U.S. Patent 3,944,387). The radiation sensitive layer may be a single layer or may comprise two or three layers as is needed in the particular imaging system selected. For example, many of the dye ablation imaging systems use a reflective layer to carry the dye. In that manner, any radiation not absorbed in the first pass through the dye containing layer is reflected to pass through that layer again, offering a second chance at absorption and increased efficiency and sensitivity. Optical spacer layers are also used in many radiation imageable systems to aid in maximizing absorption. This could readily lead to three layers in the radiation sensitive 'layer' of the present invention.

Alternative radiation sensitive layer(s) comprise amorphous magnetic materials, in particular compositions having perpendicular anisotropy. In such compositions light interacting with a thin film of the material is affected by the presence of a magnetic domain. Such materials have been called magneto-optic media, thermomagnetic media, photo-magnetic media, etc. Such media modify the character of an incident polarized light beam via the Kerr or Faraday effect with such modification being detectable by known sensors. Such media have the advantage of being erasable in either a microscopic or macroscopic sense thus providing for reusable optical storage devices.

The protective cover layers comprise a transparent polymeric material in sheet-like form having at least

0166614

tracking information present on one major surface. Various polymeric materials may be used with a preferred material being a rigid, dimensionally stable, low birefringence material such as polymethylmethacrylate. Such a material is further suitable for molding or casting in the manufacture of said cover elements. Other materials such as polyacrylic resins, in general, polyesters, polycarbonates, vinyl resins, polyvinyl acetates, polyepoxides, polysiloxanes, etc., may be used as the protective layer. The thickness of said cover elements may range from about 0.2mm to about 5.0mm with a preferred range being about 0.5mm to 4.0mm and a more preferred range being from about 1.0 to 2.0mm. The optical tracking grooves may be of varying form in terms of geometry. The square wave pattern illustrated is preferred but is not intended to be limiting. Other known geometries include a V-shaped groove wherein the included angle may encompass a considerable range, while the pitch (the number of grooves/unit width) may also be varied. Tracking grooves may be formed by a variety of known procedures including molding, casting, engraving, chemical etching, stamping and the like. A preferred method in the practice of the present invention is injection molding.

The protective layer may be secured in close, even physical contact with the radiation absorbing layer by an adhesive (preferably a transparent adhesive), fusion of the layers (without damage to the radiation sensitive material in the imaging area), physical securing of the edges of the disk), and other well known means. The adhesive need not be transparent, for example, if it can be restricted to the raised portions of the trackable patterns so that it will not interfere with the regions of the radiation sensitive layer to be imaged.

-1-

CLAIMS

1. An optical recording medium comprising

a) an optically flat substrate having on at least one surface thereof

b) a radiation sensitive encodable layer, and contiguous with said layer

c) a transparent polymeric protective layer wherein the improvement comprises the presence of optical tracking patterns within said protective layer or on the surface of said protective layer which is contiguous with the radiation sensitive encodable layer.

2. The medium of claim 1 wherein said substrate comprises a polymeric material and said protective layer also contains formatting information.

3. The medium of claim 1 or 2 wherein said polymeric material is transparent.

4. The medium of any preceding claim wherein said optical tracking patterns comprise surface features on said protective layer in the form of spiral or concentric circle grooves.

5. The medium of any preceding claim wherein said transparent protective layer is adhered to said radiation sensitive layer by an adhesive.

6. The medium of claim 5 wherein said adhesive is transparent.

7. The medium of any preceding claim wherein said radiation sensitive layer comprises an imageable layer selected from the group consisting of silver halide layers, vesicular layers, dye-bleach layers, dye-formation layers, dye ablation layers, metal ablation or deformation layers, metal oxide or deformation ablation layers, phase transition layers, and photomagnetic layers.

8. An encoded optical recording medium comprising

a) an optically flat substrate having on at least one surface thereon

b) a radiation sensitive encodable layer, and contiguous with said layer

c) a transparent polymeric protective layer wherein the improvement comprises the presence of optical tracking patterns within said protective layer or on the surface of said protective layer which is contiguous with the radiation sensitive encodable layer and wherein the encoding is in the form of machine readable modifications in the properties or concentration of material in the radiation sensitive layer in register with the optical tracking patterns.

9. The encoded medium of claim 8 wherein said substrate comprises a transparent polymeric material.

10. The medium of claim 8 or 9 wherein said optical tracking patterns comprise surface features on said protective layer in the form of concentric circular or spiral grooves.

11. The medium of claim 10 wherein said transparent protective layer is adhered to said radiation sensitive layer by an adhesive.

12. The medium of claim 11 wherein said radiation sensitive layer comprises an imageable layer selected from the group consisting of silver halide layers, vesicular layers, dye-bleach layers, dye-formation layers, dye ablation layers, metal ablation or deformation layers, metal oxide or deformation ablation layers, phase transition layers, and photomagnetic layers.

FIG.1

FIG.2

**FIG.3**

**FIG.4**